# EUROPÄISCHE PATENTSCHRIFT

(11) **EP 0 440 096 B1**
(45) Veröffentlichungstag und Bekanntmachung des Hinweises auf die Patenterteilung: **12.01.1994**
(21) Anmeldenummer: 91100937.1
(22) Anmeldetag: 25.01.1991
(51) Int. Cl.: B23Q 11/12

(54) **Werkstückspindel-Anordnung für eine Drehmaschine**
Spindle arrangement for workpieces for a lathe
Arrangement pour broches pour pièces de travail pour un tour

(30) Priorität: 27.01.1990 DE 4002453
(43) Veröffentlichungstag der Anmeldung: 07.08.1991
(73) Patentinhaber: INDEX-WERKE GMBH & CO. KG HAHN & TESSKY, D-73726 Esslingen (DE)
(72) Erfinder: Hafla, Dietmar Franz, W-7066 Hohengehren (DE); Sommer, Günther, W-7300 Esslingen (DE)
(74) Vertreter: Hoeger, Stellrecht & Partner

(56) Entgegenhaltungen:
- EP-A- 0 381 009
- EP-A- 0 415 138
- DE-B- 2 238 562

## Beschreibung

Die Erfindung betrifft eine Werkstückspindel-Anordnung für eine Drehmaschine, mit einer Werkstückspindel und einem koaxial zur Spindel angeordneten elektrischen Hohlwellenmotor, welcher einen mit der Spindel drehfest verbundenen Rotor und einen diesen koaxial umgebenden Stator aufweist.

Aus der EP-A-0 094 680 ist eine Werkstückspindel-Anordnung für eine Drehmaschine bekannt, deren Werkstückspindel von einem elektrischen Hohlwellenmotor angetrieben wird, welcher einen mit der Spindel drehfest verbundenen Rotor und einen den letzteren koaxial umgebenden Stator aufweist. Die Werkstückspindel ist mittels mehrerer Lager in einem Spindelstock gelagert, der auch den zwischen den Spindellagern angeordneten Hohlwellenmotor aufnimmt. Zur Kühlung des Hohlwellenmotors sind im Spindelstock mehrere Kühlluftkanäle vorgesehen, und zwar ein erster hohlzylinderischer Kühlluftkanal, der den Stator umgibt, und ein zweiter Kühlluftkanal zwischen dem Hohlwellenmotor und den vorderen Lagern für die Werkstückspindel. Abgesehen davon, daß sich die vom Hohlwellenmotor entwickelte Wärme mittels Luft nicht besonders wirksam abführen läßt, geht bei dieser bekannten Konstruktion die im Rotor des Hohlwellenmotors entwickelte Wärme direkt in die Werkstückspindel über, da der Rotor unmittelbar auf die Werkstückspindel aufgesetzt ist und nicht gekühlt wird, so daß bei dieser bekannten Werkstückspindel-Anordnung erhebliche Ungenauigkeiten der mit ihr hergestellten Werkstücke in Kauf genommen werden müssen, welche auf Temperaturschwankungen der Werkstückspindel und der an diese unmittelbar angrenzenden Teile, wie z.B. der vorderen Spindellager, zurückzuführen sind.

In der gemäß Art.54(3) EPÜ zu berücksichtigenden EP-A-0415 138 ist eine Werkstückspindel-Anordnung beschrieben, deren Werkstückspindel hinter ihrem zum Anbau einer Werkstück-Spannvorrichtung ausgebildeten vorderen Ende in axialer Richtung nebeneinander und koaxial zur Spindel angeordnet ein Hydraulik-Spannzylinder für die Betätigung der Werkstück-Spannvorrichtung sowie eine Hydrauliköl-Zuführvorrichtung für den Spannzylinder zugeordnet sind. Der Spannzylinder besitzt ein mit der Werkstückspindel drehfest verbundenes Gehäuse, die Hydrauliköl-Zuführvorrichtung einen nicht-drehenden ersten sowie einen mit der Spindel drehfest verbundenen, d.h. sich mit der Spindel drehenden zweiten Zuführvorrichtungsteil, und in den beiden Hydrauliköl-Zuführvorrichtungsteilen sind miteinander kommunizierende Hydraulikölkanäle vorgesehen, von denen diejenigen des zweiten, d.h. sich mit der Werkstückspindel drehenden Zuführvorrichtungsteils mit dem Spannzylinder verbunden sind. Auch bei dieser Konstruktion wird die Werkstückspindel durch einen elektrischen Hohlwellenmotor angetrieben, welcher einen zur Spindel koaxial angeordneten und mit dieser drehfest verbundenen Rotor und einen den letzteren koaxial umgebenden Stator aufweist. Ein hohlwellenartiger Ansatz des Spannzylindergehäuses bildet den mit der Spindel rotierenden zweiten Teil der Hydrauliköl-Zuführvorrichtung, der vom stationären ersten Teil der Hydrauliköl-Zuführvorrichtung umfasst wird.

Bei einer ersten Ausführungsform dieser Werkstückspindel-Anordnung ist zwischen dem Aussenumfang des Spannzylindergehäuses und dem Innenumfang des den Spannzylinder konzentrisch umgebenden Rotors ein wärmeisoliender Isolierzylinder angeordnet, in dessen Innen- und Aussenumfangsflächen Längsnuten eingearbeitet sind, welche Kühlluftkanäle bilden. Der Rotor des Hohlwellenmotors ist so ausgebildet, daß er auch die Funktion eines Ventilators hat, um so bei sich schnell drehendem Rotor Kühlluft durch die erwähnten Kühlluftkanäle hindurchzufördern. Wenn nun ein von der Werkstückspindel gehaltenes Werkstück mit angetriebenen Werkzeugen der Drehmaschine bearbeitet wird, dreht sich die Werkstückspindel numerisch gesteuert relativ langsam, jedoch bei hoher Leistungsaufnahme des elektrischen Hohlwellenmotors; bei dieser Betriebsart erfolgt im Hohlwellenmotor eine hohe Wärmeentwicklung. Zwar wird vom Stator des Hohlwellenmotors die Wärme in bekannter Weise durch Kühlmedien, wie Luft, Öl oder Wasser, abgeführt, welche durch Kühlkanäle im Statorgehäuse hindurchgefördert werden, da jedoch bei sich langsam drehender Werkstückspindel die Ventilatorfunktion des Hohlwellenrotors nicht ausreichend ist, versagt bei dieser Betriebsart die Kühlung des Rotors der Werkstückspindel-Anordnung, so daß nicht nur eine Erwärmung des Spannzylinders, sondern über diesen auch eine Erwärmung der an den Spannzylinder unmittelbar angrenzenden Werkstückspindel erfolgt, was zu den vorstehend beschriebenen Nachteilen führt.

Bei einer zweiten Ausführungsform der Werkstückspindel-Anordnung gemäp EP-A-0 415 138 ist zwar eine Zwangsflüssigkeitskühlung für den Spannzylinder und den Rotor des Hohlwellenmotors vorgesehen, welche jedoch bei mit geringer Drehzahl angetriebener Werkstückspindel gleichfalls mangelhaft ist. Bei dieser zweiten Ausführungsform führt eine Kühlmittelleitung zu einer axialen Bohrung eines konzentrisch zur Werkstückspindel angeordneten und von letzterer durchsetzten stationären Rings, zwischen dem und dem Rotor des Hohlwellenmotors eine mit der Werkstückspindel drehfest verbundene Bremsscheibe angeordnet ist. Letztere hat Kühlmittelbohrungen, die bei sich drehender Werkstückspindel an der axialen Bohrung des stationären Rings vorbeilaufen und so intermittierend mit Kühlflüssigkeit versorgt werden. Die vorstehend erwähnten Längsnuten des Isolierzylinders enden bei dieser zweiten Ausführungsform an einer in einer der Stirnflächen der Bremsscheibe vorgesehenen Ringnut, in welche die Kühlmittelbohrungen der Bremsscheibe münden. Wegen der Einspeisung der Kühlflüssigkeit über die eine axiale Bohrung des stationären Rings sinkt also die Kühlleistung mit der Drehzahl der Werkstückspindel.

Der Erfindung lag deshalb die Aufgabe zugrunde, eine Werkstückspindel-Anordnung der eingangs erwähnten Art zu schaffen, bei der mit möglichst geringem Aufwand eine zuverlässige Kühlung des Rotors des Hohlwellenmotors auch bei niederen Spindeldrehzahlen erreicht wird.

Ausgehend von einer Werkstückspindel-Anordnung der eingangs erwähnten Art, bei der der Spindel hinter ihrem zum Anbau einer Werkstück-Spannvorrichtung ausgebildeten vorderen Ende in axialer Richtung nebeneinander und koaxial zur Spindel angeordnet ein Hydraulik-Spannzylinder für die Betätigung der Werkstück-Spannvorrichtung sowie eine Hydrauliköl-Zuführvorrichtung für den Spannzylinder zugeordnet sind, der Spannzylinder ein mit der Spindel drehfest verbundenes Gehäuse und die Zuführvorrichtung einen nicht-drehenden ersten sowie einen mit der Spindel drehfest verbundenen zweiten Zuführvorrichtungsteil aufweist und die Zuführvorrichtungsteile miteinander kommunizierende Hydraulikölkanäle besitzen, von denen diejenigen des zweiten Zuführvorrichtungsteils mit dem Spannzylinder verbunden sind, läßtsich diese Aufgabe erfindungsgemäß dadurch lösen, daß die Zuführvorrichtungsteile miteinander kommunizierende Kühlflüssigkeits-Zuleitungskanäle besitzen und zur Kühlung des Rotors diesem wenigstens ein mit einem Kühlmittel beschickbarer, sich mit dem Rotor drehender Kühlmittelhohlraum zugeordnet ist, welcher mit dem mindestens einen Kühlflüssigkeits-Zuleitungskanal des zweiten Zuführvorrichtungsteils verbunden ist.

Nach der erfindungsgemäßen Lösung wird also ein im Rotor oder in einem an den Rotor angrenzenden und sich mit letzterem drehenden Teil vorgesehener Kühlmittelhohlraum mit der ohnehin vorhandenen Hydrauliköl-Zuführvorrichtung verbunden und letztere so ausgebildet, daß über diese auch Kühlflüssigkeit dem Rotor bzw. dem sich mit dem Rotor drehenden Teil zugeführt und in den Kühlmittelhohlraum eingespeist werden kann. Gegenüber der Werkstückspindel-Anordnung nach der EP-A-O 415 138 erreicht man also eine echte, Drehzahl-unabhängige Zwangskühlung ohne irgendwelche zusätzliche Teile. Über die ohnehin vorhandene Hydrauliköl-Zuführvorrichtung kann die Kühlflüssigkeit aber nicht nur zugeführt, sondern gegebenenfalls auch wieder abgeführt werden.

Bei der Kühlflüssigkeit kann es sich um jede geeignete Flüssigkeit handeln, bevorzugt wird jedoch die Verwendung von Hydrauliköl auch als Kühlflüssigkeit, weil jede Drehmaschine für das Hydrauliköl einen Kreislauf mit einem Kühler besitzt - ein Kühler für das Hydrauliköl ist nämlich ohnehin erforderlich, da sich dieses in der Hydrauliköl-Zuführvorrichtung mit seinen beiden sich gegeneinander drehenden Teilen und im Spannzylinder erheblich erwärmt.

Die beiden Zuführvorrichtungsteile können jeweils einen Kühlflüssigkeitzszu- und einen Kühlflüssigkeitsableitungskanal aufweisen, wobei der dem Rotor zugeordnete Kühlmittelhohlraum dann zwischen Kühlflüssigkeitszu- und -ableitungskanal des rotierenden Zuführvorrichtungsteils liegen würde; wie nachfolgend jedoch noch gezeigt werden wird, genügt es, die Hydrauliköl-Zuführvorrichtung für die Zuführung der Kühlflüssigkeit zu verwenden und ein Abflussende des Kühlmittelhohlraums in einen koaxial zur Spindel angeordneten Ringraum münden zu lasssen, welcher in einem stationären Teil der Werkstückspindel-Anordnung vorgesehen ist. Wenn die Kühlflüssigkeit in diesem Ringraum nicht unter Druck steht, ergeben sich auch keinerlei Abdichtungsprobleme zwischen dem mit der Werkstückspindel rotierenden Teil, in dem der Kühlmittelhohlraum vorgesehen ist, und dem stationären Teil, welches den Ringraum aufweist.

Bei Ausführungsformen der erfindungsgemässen Werkstückspindelanordnung mit einem die Werkstückspindel umfassenden Hydraulik-Spannzylinder ist es im Hinblick auf eine möglichst geringe Baulänge der Werkstückspindelanordnung empfehlenswert, den Hohlwellenmotor um den Spannzylinder herum anzuordnen, wobei es dann vorteilhaft ist, den Kühlmittelhohlraum zwischen dem Zylinderraum des Spannzylinders und den elektrisch wirksamen Bereichen des Rotors anzuordnen. Der Kühlmittelhohlraum kann also z.B. im Bereich des Aussenumfangs des Spannzylindergehäuses, im Bereich des Innenumfangs des Rotors oder in einem Teil liegen, welches zwischen Rotor und Spannzylinder angeordnet ist. Unter den elektrisch wirksamen Bereichen des Rotors sind diejenigen zu verstehen, welche für den Antrieb des Rotors erforderlich sind.

Besonders bevorzugt werden Ausführungsformen, bei denen der Kühlmittelhohlraum im Rotor angeordnet ist, weil sich dann ein besonders guter Kühleffekt ergibt.

Ist der Kühlmittelhohlraum als Kühlflüssigkeitskanal ausgebildet, so kann dieser ungefähr in axialer Richtung verlaufen, er kann aber auch schraubenlinienförmig ausgebildet sein, und natürlich können mehrere Kühlflüssigkeitskanäle vorgesehen werden, die parallel oder in Reihe geschaltet sind.

Bei Ausführungsformen, bei denen die Kühlflüssigkeit hinter dem Kühlmittelhohlraum in einen koaxial zur Spindel angeordneten Ringraum abfliesst, der in einem stationären Teil der Werkstückspindel-Anordnung vorgesehen ist, kann dieses stationäre Teil ein separates Teil oder mit dem stationären Teil der Hydrauliköl-Zuführvorrichtung identisch sein. Da die Kühlflüssigkeit in dem ringförmigen Sammelraum nicht unter Druck steht, ist es empfehlenswert, in den unten liegenden Bereich des ringförmigen Sammelraums eine Kühlflüssigkeitsabführleitung münden zu lassen.

Ferner empfiehlt sich folgende Massnahme: Da das dem Spannzylinder zuzuführende Hydrauliköl unter hohem Druck steht, kann eine Leckage am Übergang der Hydraulikölkanäle des ersten, stationären Zuführvorrichtungsteils in die Hydraulikölkanäle des zweiten, rotierenden Zuführvorrichtungsteils nicht völlig vermieden werden; deshalb ist bei einer bevorzugten Ausführungsform der erfindungsgemässen Werkstückspindel-Anordnung in axialer Richtung beiderseits des genannten Übergangs jeweils wenigstens eine Ringnut zum Sammeln von Lecköl vorgesehen, welche mit dem ringförmigen Sammelraum für die Kühlflüssigkeit verbunden ist, wenn es sich bei letzterer gleichfalls um Hydrauliköl handelt. Das Lecköl der Hydrauliköl-Zuführvorrichtung und das als Kühlflüssigkeit verwendete Hydrauliköl können dann gemeinsam einem Ölkühler zugeführt werden.

Das Grundprinzip der vorliegenden Erfindung läßt sich sowohl bei Werkstückspindel-Anordnungen verwirklichen, bei denen der Hohlwellenmotor - wie bei der Werkstückspindel-Anordnung nach der EP-A-0 415 138 hinter den Lagern für die Werkstückspindel angeordnet ist, als auch bei Ausführungsformen, bei denen sich der Hohlwellenmotor zwischen den Lagern für die Werkstückspindel befindet - wie bei der Konstruktion nach der EP-A-094 680. Im erstgenannten Fall ist es einfacher, einen Hohlwellenmotor hoher Leistung unterzubringen, im zweiten Fall läßt sich leichter eine kurze Baulänge der Werkstückspindel-Anordnung erreichen.

Weitere Merkmale, Vorteile und Einzelheiten der Erfindung ergeben sich aus den beigefügten Ansprüchen und/oder aus der nachflogenden Beschreibung und der beigefügten zeichnerischen Darstellung einer besonders vorteilhaften Ausführungsform der erfindungsgemässen Werkstückspindel-Anordnung; die Zeichnung zeigt einen axialen Schnitt durch diese Ausführungsform.

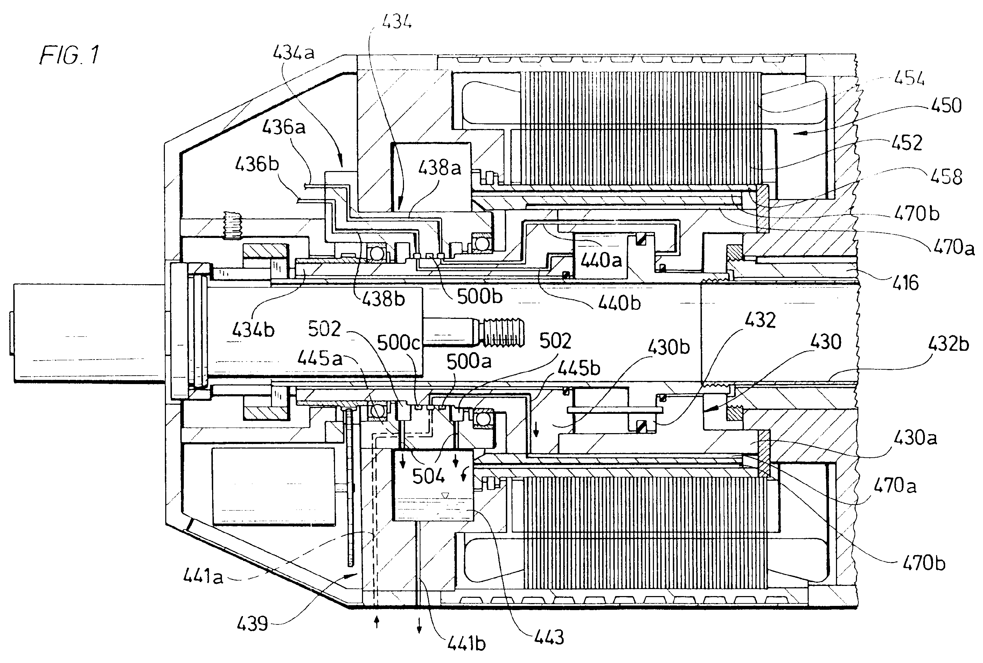

Soweit im folgenden nicht anders beschrieben, entspricht diese Ausführungsform der Ausführungsform nach den Figuren 1 bis 3 der Werkstückspindel-Anordnung gemäß der EP-A-0 415 138, so daß zur Ergänzung der Offenbarung auf die Figuren 1 bis 3 und die zugehörigen Beschreibungsteile der EP-A-0 415 138 verwiesen wird.

Rechts von den in den hier beigefügten Figuren dargestellten Teilen der erfindungsgemässen Werkstückspindel-Anordnung befindet sich ein nicht dargestellter Spindelkasten oder Spindelstock, in dem in axialer Richtung im Abstand voneinander ein vorderes und ein hinteres Spindellager für eine Werkstückspindel 416 angeordnet sind. Am vorderen, gemäß der Figur rechten und nicht dargestellten Ende der Werkstückspindel kann eine Werkstückspannvorrichtung, z.B. ein übliches Backenfutter, angebaut sein.

Die Werkstückspindel 416 ist als Hohlspindel ausgebildet, so daß sie eine Kolbenstange 432b zur Betätigung der Werkstückspannvorrichtung aufnehmen kann. Mit der Werkstückspindel 416 und der Kolbenstange 432b sind ein zweiteiliges Spannzylindergehäuse 430 und ein in diesem verschiebbarer Kolben 432 drehfest verbunden; das Spannzylindergehäuse 430 besteht aus einem vorderen Gehäuseteil 430a und einem hinteren Gehäuseteil 430b. Des weiteren besitzt die Werkstückspindel-Anordnung eine Hydrauliköl-Zuführvorrichtung 434, welche ein stationäres Aussenteil 434a und ein mit der Werkstückspindel 416 rotierendes Innenteil 434b umfasst, das bei dieser Ausführungsform vom hinteren Ende des hinteren Gehäuseteils 430b des Spannzylindergehäuses 430 gebildet wird. Zum Aussenteil 434a führen Hydraulikölleitungen 436a und 436b, welche an Ölbohrungen 438a bzw. 438b im stationären Aussenteil 434a angeschlossen sind.

Dieses stationäre Aussenteil 434a der Hydrauliköl-Zuführvorrichtung 434 ist mit einem ringförmigen Abführteil 439 fest verbunden, welches infolgedessen gleichfalls stationär ist und eine Kühlölzuführbohrung 441a, einen ringförmigen Sammelraum 443 und eine in letzteren von unten mündende Öl-Abflussbohrung 441b aufweist. Die Kühlölzuführbohrung 441a mündet in eine Kühlölbohrung 445a im stationären Aussenteil 434a der Hydrauliköl-Zuführvorrichtung 434.

Der Spannzylinder 430, 432 wird von einem Hohlwellenmotor 450 umfasst, der konzentrisch zur Werkstückspindel 416 einen sich mit dieser drehender, innen liegenden Rotor 452 und einen den letzteren umfassenden, stationären Stator 454 besitzt, welcher von einem Statorgehäuse 424 umfasst wird. Zwischen dem Spannzylindergehäuse 430 und dem Rotor 452 befindet sich ein sicht mit dem Spannzylindergehäuse 430 drehender Kühlzylinder 458, der auch Teil des Rotors 452 sein kann und dessen gemäß der Zeichnung linkes Ende sich abgedichtet im Abführteil 439 dreht.

Die Hydraulikölleitungen 438a und 438b sowie die Kühlölbohrung 445a münden in Ringnuten 500a bzw. 500c bzw. 500b am Innenumfang des stationären Aussenteils 434a der Hydrauliköl-Zuführvorrichtung 434. In die Ringnuten 500a und 500c münden Hydraulikölbohrungen 440a und 440b im rotierenden hinteren Gehäuseteil 430b des Spannzylindergehäuses 430, und die Hydraulikölbohrungen 440a und 440b münden vor bzw. hinter dem Kolben 432 in den Zylinderraum des Spannzylindergehäuses 430. Eine Kühlölbohrung 445b im rotierenden hinteren Gehäuseteil 430b des Spannzylindergehäuses 430 mündet einerseits in die Ringnut 500b und andererseits in einen Kühlmittelkanal 470a des Kühlzylinders 458, der mit dem einen Ende eines Kühlmittelkanals 470b des Kühlzylinders in Verbindung steht, und das andere Ende des Kühlmittelkanals 470b mündet in den Sammelraum 443. Da das linke Ende des Kühlzylinders 458 im Abführteil 439 drehbar, jedoch abgedichtet angeordnet ist, kann das Kühlöl nur in den Sammelraum 443 abfliessen. Über die Ringnuten 500a, 500b und 500c kann also in jeder Drehwinkelstellung der Werkstückspindel 416 Drucköl dem Spannzylindergehäuse 430 zu bzw. aus diesem abgeführt und Kühlöl in den Kühlzylinder 458 eingespeist werden, wobei dieses Kühlöl über den Sammelraum 443 abgeführt wird.

Beiderseits der Ringnuten 500a, 500b und 500c weist das stationäre Aussenteil 434a ringförmige Sammelnuten 502 für Lecköl auf, in die von unten Ölbohrungen 504 münden, die ihrerseits in den Sammelraum 443 münden. Auf diese Weise ist es möglich, das Lecköl zusammen mit dem abzuführenden Kühlöl über die Abflussbohrung 441b abzuziehen.

Erfindungsgemäß wird also über die Hydrauliköl-Zuführvorrichtung 434 nicht nur das Drucköl für den Spannzylinder 430, 432 zu- und wieder abgeführt, sondern es wird auch das Kühlöl für den Kühlmittelkanal 470a, 470b zugeführt, so daß sich die im inneren Bereich des Hohlwellenmotors 450 entwickelnde Wärme problemlos abführen und vor allem daran hindern läßt, über den Spannzylinder 430 die Werkstückspindel 416 aufzuheizen.

Wird als Kühlöl Hydrauliköl verwendet, so wie dies bei der bevorzugten Ausführungsform der Fall ist, können Lecköl und erwärmtes Kühlöl gemeinsam über die Abflußbohrung 441b abgeführt und zusammen mit dem vom Spannzylinder kommenden Hydrauliköl einem Ölkühler zugeführt werden.

## Patentansprüche

1. Werkstückspindel-Anordnung für eine Drehmaschine, mit einer Werkstückspindel (416) und einem koaxial zur Spindel angeordneten elektrischen Hohlwellenmotor (450), welcher einen mit der Spindel drehfest verbundenen Rotor (452) und einen diesen koaxial umgebenden Stator (454) aufweist, wobei der Spindel (416) hinter ihrem zum Anbau einer Werkstück-Spannvorrichtung ausgebildeten vorderen Ende in axialer Richtung nebeneinander und koaxial zur Spindel angeordnet ein Hydraulik-Spannzylinder (430, 432) für die Betätigung der Werkstück-Spannvorrichtung sowie eine Hydrauliköl-Zuführvorrichtung (434) für den Spannzylinder (430, 432) zugeordnet sind, der Spannzylinder ein mit der Spindel (416) drehfest verbundenes Gehäuse (430) und die Zuführvorrichtung (434) einen nicht-drehenden ersten (434a) sowie einen mit der Spindel (416) drehfest verbundenen zweiten Zuführvorrichtungsteil (434b) aufweist, die Zuführvorrichtungsteile (434a, 434b) miteinander kommunizierende Hydraulikölkanäle (438a, 438b, 440a, 440b) sowie miteinander kommunizierende Kühlflüssigkeitszuleitungskanäle (445a, 445b) besitzen, die Hydraulikölkanäle (440a, 440b) des zweiten Zuführvorrichtungsteils (434b) mit dem Spannzylinder (430) verbunden sind und zur Kühlung des Rotors (452) diesem wenigstens ein mit einem Kühlmittel beschickbarer, sich mit dem Rotor drehender Kühlmittelhohlraum (470a, 470b) zugeordnet ist, welcher mit dem mindestens einen Kühlflüssigkeitszuleitungskanal (445b) des zweiten Zuführvorrichtungsteils (434b) verbunden ist.

2. Werkstückspindel-Anordnung nach Anspruch 1, dadurch gekennzeichnet, daß der Kühlmittelhohlraum (470a, 470b) zwischen den elektrisch wirksamen Bereichen des Rotors (452) und der Spindel (416) angeordnet ist.

3. Werkstückspindel-Anordnung nach Anspruch 1 oder 2, dadurch gekennzeichnet, daß der Hohlwellenmotor (450) den Spannzylinder (430, 432) umgibt und der Kühlmittelhohlraum (470a, 470b) zwischen dem Zylinderraum des Spannzylinders und den elektrisch wirksamen Bereichen des Rotors (452) angeordnet ist.

4. Werkstückspindel-Anordnung nach einem oder mehreren der vorstehenden Ansprüche, dadurch gekennzeichnet, daß der Kühlmittelhohlraum (470a, 470b) im Rotor (452) angeordnet ist.

5. Werkstückspindel-Anordnung nach einem oder mehreren der vorstehenden Ansprüche, dadurch gekennzeichnet, daß das Spannzylindergehäuse (430) auch den zweiten Zuführvorrichtungsteil (434b) bildet.

6. Werkstückspindel-Anordnung nach einem oder mehreren der vorstehenden Ansprüche, dadurch gekennzeichnet, daß der erste Zuführvorrichtungsteil (434a) den zweiten Zuführvorrichtungsteil (434b) umgibt.

7. Werkstückspindel-Anordnung nach einem oder mehreren der vorstehenden Ansprüche, dadurch gekennzeichnet, daß ein Abflußbereich des Kühlmittelhohlraums (470a, 470b) in einen die Spindelachse umfassenden ringförmigen Sammelraum (443) eines nicht-drehenden Abführteils (439) mündet, welches neben dem Rotor (452) angeordnet ist.

8. Werkstückspindel-Anordnung nach einem oder mehreren der vorstehenden Ansprüche, dadurch gekennzeichnet, daß der Kühlmittelhohlraum (470a, 470b) von mindestens einem Kühlmittelkanal gebildet wird, dessen Einlaßende mit dem Kühlflüssigkeits-Zuleitungskanal (445b) des zweiten Zuführvorrichtungsteils (434b) kommuniziert und dessen Auslaßende in den Sammelraum (443) mündet.

9. Werkstückspindel-Anordnung nach Anspruch 6, dadurch gekennzeichnet, daß an mindestens einer der aneinandergrenzenden Umfangsflächen der beiden Zuführvorrichtungsteile (434a, 434b) Ringnuten (500a, 500b, 500c) vorgesehen sind, über die die Hydraulikölkanäle (438a, 438b, 440a, 440b) und die Kühlflüssigkeitszuleitungskanäle (445a, 445b) der beiden Zuführvorrichtungsteile (434a, 434b) miteinander kommunizieren.

10. Werkstückspindel-Anordnung nach den Ansprüchen 6 und 7, dadurch gekennzeichnet, daß in axialer Richtung beiderseits des Übergangs der Hydraulikölkanäle (438a, 438b) des ersten Zuführvorrichtungsteils (434a) in die Hydraulikölkanäle (440a, 440b) des zweiten Zuführvorrichtungsteils (434b) in einem der beiden Zuführvorrichtungsteile (434a, 434b) jeweils wenigstens eine Ringnut (502) zum Sammeln von Lecköl vorgesehen ist, welche mit dem Sammelraum (443) verbunden ist.

11. Werkstückspindel-Anordnung nach Anspruch 7, dadurch gekennzeichnet, daß das eine Ende des den Kühlmittelhohlraum (470a, 470b) aufnehmenden Bereichs (458) des Hohlwellenmotors (450) im Abführteil (439) drehbar, jedoch abgedichtet angeordnet ist.

12. Werkstückspindel-Anordnung nach einem oder mehreren der vorstehenden Ansprüche, dadurch gekennzeichnet, daß der Hohlwellenmotor (450) hinter den Lagern für die Werkstückspindel (416) angeordnet ist.

13. Werkstückspindel-Anordnung nach einem oder mehreren der Ansprüche 1 - 11, dadurch gekennzeichnet, daß der Hohlwellenmotor (450) zwischen den Lagern für die Werkstückspindel (416) angeordnet ist.

## Claims

1. Workpiece spindle arrangement for a lathe, comprising a workpiece spindle (416) and an electrical hollow-shaft motor (450) arranged coaxially to the spindle, said motor comprising a rotor (452) non-rotatably connected to the spindle and a stator (454) coaxially surrounding said rotor, wherein a hydraulic clamping cylinder (430, 432) for the actuation of a workpiece clamping device as well as a hydraulic oil supply device (434) for the clamping cylinder (430, 432) are associated with the spindle (416) behind its front end designed for attachment of the workpiece clamping device, said clamping cylinder and said supply device being arranged next to one another in axial direction and coaxially to the spindle, the clamping cylinder comprising a housing (430) non-rotatably connected to the spindle (416) and the supply device (434) comprising a non-rotating first supply device portion (434a) as well as a second supply device portion (434b) non-rotatably connected to the spindle (416), the supply device portions (434a, 434b) having hydraulic oil channels (438a, 438b, 440a, 440b) communicating with one another as well as cooling liquid supply channels (445a, 445b) communicating with one another, the hydraulic oil channels (440a, 440b) of the second supply device portion (434b) being connected to the clamping cylinder (430) and for cooling the rotor (452) at least one coolant cavity (470a, 470b) being associated with said rotor, said coolant cavity being suppliable with a coolant, rotating with the rotor and being connected with the at least one cooling liquid supply channel (445b) of the second supply device portion (434b).

2. Workpiece spindle arrangement as defined in claim 1, characterized in that the coolant cavity (470a, 470b) is arranged between the electrically operative regions of the rotor (452) and the spindle (416).

3. Workpiece spindle arrangement as defined in claim 1 or 2, characterized in that the hollow-shaft motor (450) surrounds the clamping cylinder (430, 432) and the coolant cavity (470a, 470b) is arranged between the cylinder chamber of the clamping cylinder and the electrically operative regions of the rotor (452).

4. Workpiece spindle arrangement as defined in any or several of the preceding claims, characterized in that the coolant cavity (470a, 470b) is arranged in the rotor (452).

5. Workpiece spindle arrangement as defined in any or several of the preceding claims, characterized in that the clamping cylinder housing (430) also forms the second supply device portion (434b).

6. Workpiece spindle arrangement as defined in any or several of the preceding claims, characterized in that the first supply device portion (434a) surrounds the second supply device portion (434b).

7. Workpiece spindle arrangement as defined in any or several of the preceding claims, characterized in that an outflow region of the coolant cavity (470a, 470b) opens into an annular collecting chamber (443) of a non-rotating discharge portion (439) arranged next to the rotor (452), said collecting chamber encompassing the spindle axis.

8. Workpiece spindle arrangement as defined in any or several of the preceding claims, characterized in that the coolant cavity (470a, 470b) is formed by at least one coolant channel having an inlet end communicating with the cooling fluid supply channel (445b) of the second supply device portion (434b) and an outlet end opening into the collecting chamber (443).

9. Workpiece spindle arrangement as defined in claim 6, characterized in that annular grooves (500a, 500b, 500c) are provided at at least one of the adjoining circumferential surfaces of the two supply device portions (434a, 434b), the hydraulic oil channels (438a, 438b, 440a, 440b) and the cooling fluid supply channels (445a, 445b) of the two supply device portions (434a, 434b) communicating with one another via said annular grooves.

10. Workpiece spindle arrangement as defined in claims 6 and 7, characterized in that in axial direction on both sides of the transition of the hydraulic oil channels (438a, 438b) of the first supply device portion (434a) into the hydraulic oil channels (440a, 440b) of the second supply device portion (434b) at least one annular groove (502) connected to the collecting chamber (443) is provided each time in one of the two supply device portions (434a, 434b) for collecting leaking oil.

11. Workpiece spindle arrangement as defined in claim 7, characterized in that the one end of the region (458) of the hollow-shaft motor (450) accommodating the coolant cavity (470a, 470b) is arranged in the discharge portion (439) so as to be rotatable but sealed.

12. Workpiece spindle arrangement as defined in any or several of the preceding claims, characterized in that the hollow-shaft motor (450) is arranged behind the bearings for the workpiece spindle (416).

13. Workpiece spindle arrangement as defined in any or several of claims 1 - 11, characterized in that the hollow-shaft motor (450) is arranged between the bearings for the workpiece spindle (416).

## Revendications

1. Dispositif de broche porte-pièce pour un tour, comportant une broche porte-pièce (416) et un moteur électrique (450) à arbre creux, qui est disposé coaxialement par rapport à la broche et comporte un rotor (452) relié avec blocage en rotation à la broche, et un stator (454) entourant coaxialement ce rotor, et dans lequel à la broche (416) sont associés, selon une disposition côte-à-côte et coaxiale par rapport à la broche dans la direction axiale, en arrière de l'extrémité avant, agencée pour le montage d'un dispositif de serrage de la pièce à usiner, un vérin de serrage hydraulique (430, 432) servant à actionner le dispositif de serrage de la pièce à usiner ainsi qu'un dispositif (434) d'alimentation de l'huile hydraulique pour le vérin de serrage (430, 432), le vérin de serrage comporte un boîtier (430) raccordé avec blocage en rotation à la broche (416), et le dispositif d'alimentation (434) comporte une première partie non tournante (434a) ainsi qu'une seconde partie (434b) raccordée avec blocage en rotation à la broche (416), les parties (434a, 434b) du dispositif d'alimentation comportent des canaux (438a, 438b, 440a, 440b) pour l'huile hydraulique, qui communiquent entre eux, ainsi que des canaux (445a, 445b) d'amenée du liquide de refroidissement, qui communiquent entre eux, les canaux (440a, 440b) pour l'huile hydraulique de la seconde partie (434b) du dispositif d'alimentation sont raccordés. au vérin de serrage (430) et que pour le refroidissement du rotor (452), à ce dernier est associé au moins une cavité (470a, 470b) pour le fluide de refroidissement, qui peut être chargée par un fluide de refroidissement, tourne avec le rotor et est raccordée au moins un canal (445b) d'amenée du liquide de refroidissement de la seconde partie (434b) du dispositif d'alimentation.

2. Dispositif de broche porte-pièce selon la revendication 1, caractérisé en ce que la cavité (470a, 470b) pour le fluide de refroidissement est disposée entre les zones, actives du point de vue électrique, du rotor (452) et de la broche (416).

3. Dispositif de broche porte-pièce selon la revendication 1 ou 2, caractérisé en ce que le moteur (450) de l'arbre creux entoure le vérin de serrage (430, 432), et la cavité (470a, 470b) pour le fluide de refroidissement est disposée entre la chambre du cylindre du vérin de serrage et les zones, actives du point de vue électrique, du rotor (452).

4. Dispositif de broche porte-pièce selon une ou plusieurs revendications précédentes, caractérisé en ce que la cavité (470a, 470b) pour le fluide de refroidissement est disposée dans le rotor (452).

5. Dispositif de broche porte-pièce selon une ou plusieurs des revendications précédentes, caractérisé en ce que le boîtier (430) du vérin de serrage forme également la seconde partie (434b) du dispositif d'alimentation.

6. Dispositif de broche porte-pièce selon une ou plusieurs des revendications précédentes, caractérisé en ce que la première partie (434a) du dispositif d'alimentation entoure la seconde partie (434b) du dispositif d'alimentation.

7. Dispositif de broche porte-pièce selon une ou plusieurs des revendications précédentes, caractérisé en ce qu'une zone d'évacuation de la cavité (470a, 470b) pour le fluide de refroidissement débouche dans une chambre de collecte annulaire (443), qui entoure l'axe de la broche, d'une partie non tournante d'évacuation (439), qui est disposée à côté du rotor (452).

8. Dispositif de broche porte-pièce selon une ou plusieurs des revendications précédentes, caractérisé en ce que la cavité (470a, 470b) pour le fluide de refroidissement est formée par au moins un canal pour le fluide de refroidissement, dont l'extrémité d'entrée communique avec le canal (445b) d'amenée du liquide de refroidissement de la seconde partie (434b) du dispositif d'alimentation et dont l'extrémité de sortie débouche dans la chambre de collecte (443).

9. Dispositif de broche porte-pièce selon la revendication 6, caractérisé en ce que sur au moins l'une des surfaces circonférentielles contiguës des deux parties (434a, 434b) du dispositif d'alimentation sont prévues des gorges annulaires (500a, 500b, 500c), au moyen desquelles les canaux (438a, 438b, 440a, 440b) pour de l'huile hydraulique et les canaux (445a, 445b) d'amenée du fluide de refroidissement des deux parties (434a, 434b) du dispositif d'alimentation communiquent entre eux.

10. Dispositif de broche porte-pièce selon les revendications 6 et 7, caractérisé en ce que dans la direction axiale et des deux côtés de la jonction des canaux (438a, 438b) pour l'huile hydraulique de la première partie (434a) du dispositif d'alimentation avec les canaux (440a, 440b) pour l'huile hydraulique de la seconde partie (434b) du dispositif d'alimentation est prévue respectivement au moins une gorge annulaire (502) servant à collecter une fuite d'huile et qui est raccordée à la chambre de collecte (443).

11. Dispositif de broche porte-pièce selon la revendication 7, caractérisé en ce qu'une extrémité de la partie (458), qui loge la cavité (470a, 470b) pour le fluide de refroidissement, du moteur (450) à arbre creux est montée de manière à pouvoir tourner dans la partie d'évacuation (439), tout en étant fermée de façon étanche.

12. Dispositif de broche porte-pièce selon une ou plusieurs des revendications précédentes, caractérisé en ce que le moteur (450) à arbre creux est disposé en arrière des paliers pour la broche porte-pièce (416).

13. Dispositif de broche porte-pièce selon une ou plusieurs des revendications 1-11, caractérisé en ce que le moteur à arbre creux (450) est disposé entre les paliers pour la broche porte-pièce (416).
